# EUROPÄISCHE PATENTSCHRIFT

(11) **EP 0 731 148 B1**
(45) Veröffentlichungstag und Bekanntmachung des Hinweises auf die Patenterteilung: **06.05.1999**
(21) Anmeldenummer: 96102796.8
(22) Anmeldetag: 24.02.1996
(51) Int. Cl.: C09D 7/02, C09D 5/02, C08G 18/28, C08G 18/79

(54) **Dispergierhilfsmittel für wässrige Lacke**
Dispersing agent for aqueous paints
Agent dispersant pour peintures aqueuses

(30) Priorität: 09.03.1995 DE 19508390
(43) Veröffentlichungstag der Anmeldung: 11.09.1996
(73) Patentinhaber: BAYER AG, 51368 Leverkusen (DE)
(72) Erfinder: Kirchmeyer, Stephan, Dr., 51375 Leverkusen (DE); Mazanek, Jan, Dr., 51061 Köln (DE); Wilmes, Oswald, Dr., 51061 Köln (DE); König, Klaus, Dr., 51519 Odenthal (DE)

(56) Entgegenhaltungen:
- EP-A- 0 335 197
- DE-A- 2 054 885
- DE-A- 3 527 038
- FR-A- 2 241 597

## Beschreibung

Die Erfindung betrifft die Verwendung von wasserlöslichen Polyisocyanat-Additionsprodukten auf Basis von ausgewählten Ausgangsmaterialien als Dispergiermittel bei der Einarbeitung von Feststoffen in wäßrige Lacke oder Beschichtungsmittel.

Um Feststoffe in flüssige Medien einzubringen, sind hohe mechanische Kräfte notwendig. Dies hängt in hohem Maß von der Benetzbarkeit des Feststoffs durch das umgebende Medium sowie von der Affinität zu diesem Medium ab. Um diese Dispergierkräfte zu reduzieren, ist es üblich, Dispergierhilfsmittel anzuwenden, welche die Einarbeitung erleichtern. Hierbei handelt es sich meistens um oberflächenaktive Stoffe, auch Tenside genannt, von anionen- oder kationenaktiver sowie nichtionogener Struktur. Diese Stoffe werden in relativ geringen Zusatzmengen entweder auf den Feststoff direkt aufgebracht oder dem Dispergiermedium zugesetzt. Durch ein solches Tensid wird der Dispergieraufwand wesentlich reduziert.

Bekannt ist weiterhin, daß diese Feststoffe nach dem Dispergieren wieder zum Reagglomerieren neigen, was den zuvor aufgewendeten Dispergieraufwand zunichte macht und zu gravierenden Problemen führt. Dieses Phänomen erklärt man sich durch London/van der Waalsche Kräfte, durch welche sich die Feststoffe gegenseitig anziehen. Um diese Anziehungkräfte zu überlagern, müssen Adsorptionsschichten auf die Feststoffe aufgebracht werden. Dies geschieht durch die Verwendung solcher Tenside.

Während und nach der Dispergierung tritt jedoch eine Wechselwirkung des umgebenden Mediums mit dem Feststoffpartikel ein, und es erfolgt eine Desorption des Tensids unter Austausch gegen das, in höherer Konzentration vorliegende, umgebende Medium. Dieses umgebende Medium ist jedoch in den meisten Fällen nicht in der Lage, solche stabilen Adsorptionsschichten aufzubauen und das ganze System bricht zusammen. Dies macht sich z.B. bemerkbar durch Viskositätsanstieg in flüssigen Systemen und Glanzverluste und Farbtonverschiebungen in Lacken und Beschichtungen.

Es fehlte daher nicht an Versuchen, wirksame Dispergiermittel für Feststoffe, insbesondere Pigmente zur Verfügung zu stellen, die insbesondere die Einarbeitung von derartigen Feststoffen in Lösungsmittel enthaltende Lacke der an sich bekannten Art erleichtern und die Herstellung von sedimentationsstabilen Beschichtungsmitteln gestatten. So werden beispielsweise in EP-A-0 154 678, EP-A-0 205 510 oder EP-A-0 335 197 für diesen Zweck gut geeignete Dispergierhilfsmittel beschrieben.

Die der vorliegenden Erfindung zugrundeliegende Aufgabe bestand jedoch darin, geeignete Dispergiermittel für Feststoffe, insbesondere Pigmente bei deren Einarbeitung in wäßrige Lacke und Beschichtungsmittel zur Verfügung zu stellen. Es versteht sich, daß Rückschlüsse von den Erkenntnissen im Zusammenhang mit Lösungsmittel enthaltenden Beschichtungsmitteln auf wäßrige Systeme nicht möglich sind, weil sich Beschichtungsmittel auf Basis von Lösungsmitteln einerseits und Wasserlacke, d.h. wäßrige Beschichtungsmittel andererseits grundsätzlich bezüglich der Dispergierbarkeit von Feststoffen, insbesondere Pigmenten unterscheiden.

Mit den nachstehend näher beschriebenen, erfindungsgemäß zu verwendenden Dispergiermitteln ist es überraschenderweise gelungen, die genannte Aufgabe zu lösen.

Gegenstand der Erfindung ist die Verwendung von wasserlöslichen, hydrophile Polyetherketten aufweisenden Polyisocyanat-Additionsprodukten mit einem Gehalt an Isocyanatgruppen von max. 1,0 Gew.-% und einem Gehalt an über monofunktionelle Alkohole B) eingebauten, innerhalb von Polyetherketten angeordneten Ethylenoxideinheiten (Molekulargewicht = 44) von 30 bis 80 Gew.-%, die durch Umsetzung
A) einer Polyisocyanat-Komponente einer (mittleren) NCO-Funktionalität von mindestens 2,5 und einem NCO-Gehalt von 5 bis 50 Gew.-%
mit
B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereichs 150 bis 5000 mit einem Gehalt an Ethylenoxideinheiten von 50 bis 99,5 Gew.-%, der durch Alkoxylierung eines einwertigen Startermoleküls und gegebenenfalls im Anschluß an die Alkoxylierung durchgeführte Modifizierung des Alkoxylierungsprodukts durch Anlagerung von ε-Caprolacton in einer Menge von bis zu 40 Gew.-%, bezogen auf das Gewicht des einwertigen Alkohols, hergestellt worden ist,
C) 0 bis 20 Äquivalent-%, bezogen auf die Isocyanatgruppen von A), einer einwertigen Alkoholkomponente, bestehend aus mindestens einem, von den Alkoholen der Komponente B) verschiedenen, einwertigen Alkohol des Molekulargewichtsbereich 32 bis 5000,
D) 0 bis 50 Äquivalent-%, bezogen auf die Isocyanatgruppen von A), einer Aminkomponente, bestehend aus mindestens einem tertiären Amin des Molekulargewichtsbereichs 88 bis 250 mit einer gegenüber Isocyanatgruppen im Sinne der NCO-Additionsreaktion reaktionsfähigen Gruppe
und
E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereichs 32 bis 3000
unter Einhaltung einer NCO-Kennzahl von 100 bis 200 unter Urethan- und gegebenenfalls Harnstoffbildung hergestellt worden sind, wobei gegebenenfalls im Überschuß vorliegende NCO-Gruppen durch gleichzeitig oder anschließend erfolgende Sekundärreaktionen bis auf einen Restgehalt von maximal 1,0 Gew.-% abreagiert worden sind,
als Dispergiermittel bei der Einarbeitung von Feststoffen in wäßrige Lacke oder Beschichtungsmittel.

Die erfindungswesentlichen Polyisocyanat-Additionsprodukte stellen unter Urethan- und gegebenenfalls Harnstoffbildung hergestellte Umsetzungsprodukte von Polyisocyanaten A) mit einwertigen Alkoholen B) und gegebenenfalls weiteren Ausgangskomponenten C), D) und/oder E) dar, die gegebenenfalls gleichzeitig und/oder im Anschluß an die zur Urethan- und gegebenenfalls Harnstoffbildung führende Additionsreaktion durch Sekundärreaktion von gegebenenfalls vorliegenden überschüssigen Isocyanatgruppen befreit worden sind.

Der Gehalt der erfindungswesentlichen Umsetzungsprodukte an über die Komponente B) eingebauten Ethylenoxideinheiten (Molekulargewicht = 47) liegt bei 30 bis 80, vorzugsweise 40 bis 75 Gew.-%. Der Gehalt an freien Isocyanatgruppen liegt unter 1 Gew.-%, im allgemeinen sind freie Isocyanatgruppen nicht mehr nachweisbar.

Die zur Herstellung der erfindungswesentlichen Additionsprodukte eingesetzte Polyisocyanatkomponente A) weist eine (mittlere) NCO-Funktionalität von mindestens 2,5, vorzugsweise mindestens 3,0 und einen NCO-Gehalt von 5 bis 50, vorzugsweise 7 bis 30 Gew.-% auf. Die Polyisocyanatkomponente A) besteht aus mindestens einem organischen Polyisocyanat. Geeignete Polyisocyanate sind höherfunktionelle, unmodifizierte Polyisocyanate oder den gemachten Angaben bezüglich NCO-Gehalt und -Funktionalität entsprechende Modifizierungsprodukte der an sich bekannten Polyisocyanate, insbesondere Diisocyanate.

Unmodifizierte Polyisocyanate, die als Komponente A) oder als Teil der Komponente A) geeignet sind, sind beispielsweise die höherfunktionellen Polyisocyanate der Diphenylmethan-Reihe, wie sie neben den entsprechenden Diisocyanaten bei der Phosgenierung von Anilin/Formaldehyd-Kondensaten anfallen oder aber an sich bekannte höherfunktionelle Polyisocyanate wie beispielsweise 4,4',4"-Triisocyanato-triphenylmethan.

Im allgemeinen bestehen die Polyisocyanate der Komponente A) jedoch aus den bereits angesprochenen Modifizierungsprodukten einfacher Polyisocyanate. Unter "Modifizierung" ist in diesem Zusammenhang insbesondere die Herstellung von Biuret-, Urethan-, Allophanat- und/oder Isocyanuratgruppen aufweisenden Derivaten von einfachen Polyisocyanaten, insbesondere Diisocyanaten zu verstehen. Zur Herstellung derartiger Derivate einzusetzende Diisocyanate sind beispielsweise Hexamethylendiisocyanat, Cyclohexan-1,3- und -1,4-Diisocyanat sowie beliebige Gemische dieser Isomeren, 1-Isocyanato-3,3,5-trimethyl-5-isocyanatomethyl-cyclohexan, 2,4- und 2,6-Hexahydrotoluylendiisocyanat sowie beliebige Gemische dieser Isomeren, Perhydro-2,4'-und/oder -4,4'-diphenylmethandiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat.

Besonders bevorzugt werden zur Herstellung der modifizierten Diisocyanate die technisch wichtigen Polyisocyanate verwendet, wie beispielsweise 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technische Gemische mit 2,4'- und 2,2'-Diisocyanatodiphenylmethan, Hexamethylendiisocyanat oder Gemische dieser Diisocyanate. Ganz besonders bevorzugt handelt es sich bei den Polyisocyanaten der Komponente A) um die Isocyanuratgruppen aufweisende Modifizierungsprodukte von 2,4-Diisocyanatotoluol oder dessen technischen Gemische mit bis zu 35 Gew.-%, bezogen auf Gemisch, an 2,6-Diisocyanatotoluol. Diese besonders bevorzugten, Isocyanuratgruppen aufweisenden Polyisocyanate weisen im allgemeinen einen NCO-Gehalt von 7 bis 30 Gew.-% bei einer NCO-Funktionalität von 3 bis 6 auf. Oftmals wird die Polyisocyanatkomponente A) in Form einer Lösung in einem inerten Lösungsmittel wie beispielsweise Butylacetat eingesetzt.

Die einwertige Alkoholkomponente B) besteht aus mindestens einem einwertigen Alkohol mit einem (aus dem Hydroxylgruppengehalt berechenbaren) Molekulargewicht von 150 bis 5000, vorzugsweise 500 bis 3000, der 50 bis 99,5, vorzugsweise 70 bis 99,5 Gew.-%, bezogen auf das Gesamtgewicht des einwertigen Alkohols, an innerhalb einer Polyetherkette eingebauten Ethylenoxideinheiten aufweist. Als Komponente B) oder als Teil der Komponente B) geeignet sind demzufolge an sich bekannte Alkoxylierungsprodukte von einwertigen Startermolekülen, die pro Molekül im statistischen Mittel mindestens 3, vorzugsweise 7 bis 100 Alkylenoxideinheiten aufweisen, die ihrerseits zu mindestens 50 Gew.-%, vorzugsweise 70 bis zu 100 Gew.-% aus Ethylenoxideinheiten bestehen. Die einwertigen Alkohole, die als Komponente B) oder als Teil der Komponente B) in Betracht kommen, müssen nicht unbedingt ausschließlich aus derartigen Alkoxylierungsprodukten von einwertigen Startermolekülen bestehen, sondern können auch Modifizierungsprodukte derartiger Ethergruppen aufweisender Monoole darstellen. Geeignete Modifizierungsprodukte sind insbesondere die Anlagerungsprodukte von ε-Caprolacton im Sinne einer ringöffnenden Esterbildung an die vorab hergestellten Alkoxylierungsprodukte. Diese modifizierten einwertigen Alkohole weisen bis zu 40 Gew.-% an endständigen die Isocyanatgruppen von ε-Caprolacton-Einheiten (berechnet als C₆H₁₀O₂, Molekulargewicht = 114) auf.

Zur Herstellung der einwertigen Polyetheralkohole geeignete Startermoleküle sind insbesondere einwertige Alkohole, Phenole oder Carbonsäuren. Die Startermoleküle weisen im allgemeinen 1 bis 30, vorzugsweise 1 bis 10 und besonders bevorzugt 1 bis 4 Kohlenstoffatome auf. Beispielhaft genannt seien Alkohole wie Methanol, Ethanol, n-Propanol, n-Butanol, 1-Pentanol, 1-Hexanol, 1-Octanol, Oleylalkohol oder Benzylalkohol oder Phenole wie beispielsweise Phenol, Kresole, Methylphenole, Nonylphenole oder Dodecylphenole oder alkoxylierbare Säuren wie beispielsweise Essigsäure, Buttersäure, Caprin-, Laurin-, Palmitin- oder Stearinsäure oder auch Cyclohexancarbonsäure. Die bevorzugten Startermoleküle sind einwertige Alkohole mit 1 bis 4 Kohlenstoffatomen der oben beispielhaft genannten Art.

Zur an sich bekannten Alkoxylierungsreaktion werden Ethylenoxid oder Kombinationen aus Ethylenoxid mit bis zu 50, vorzugsweise bis zu 30 Gew.-%, bezogen auf die Gesamtmenge der Alkylenoxide, an anderen Alkylenoxiden wie insbesondere Propylenoxid verwendet. Falls außer Ethylenoxid auch andere Alkylenoxide mitverwendet werden, kann dies unter Verwendung entsprechender Alkylenoxidgemische oder auch unter sukzessiver Addition der Alkylenoxide unter Blockbildung erfolgen.

Die Komponente B) kommt in einer Menge von 5 bis 100, vorzugsweise 50 bis 90 Äquivalent-%, bezogen auf die Isocyanatgruppen der Komponente A) zum Einsatz.

Die gegebenenfalls mitzuverwendende Komponente C) besteht aus mindestens einem anderem, den unter B) gemachten Ausführungen nicht entsprechendem einwertigen Alkohol. In Betracht kommen insbesondere einwertige Esteralkohole des Molekulargewichtsbereichs 94 bis 350 wie beispielsweise Hydroxybuttersäuremethylester, Ethylenglykolmonoacetat, 2,2-Dimethylhydroxypropionsäuremethylester, Milchsäurepropylester oder ω-Hydroxycapronsäureethylester oder einwertige Alkohole des Molekulargewichtsbereichs 130 bis 2000, die durch an sich bekannte Anlagerung von ε-Caprolacton an einwertige Alkohole der bereits oben beispielhaft genannten Art erhalten worden sind.

Beliebige Gemische der "Esteralkohole" bzw. der einwertigen Esteralkohole auf Caprolacton-Basis können selbstverständlich auch eingesetzt werden. Die Komponente C) wird, falls überhaupt, in einer Menge von bis zu 20, vorzugsweise bis zu 10 Äquivalent-%, bezogen auf die Isocyanatgruppen der Komponente A) verwendet. Besonders bevorzugt wird auf die Mitverwendung der Komponente C) verzichtet.

Bei der Komponente D) handelt es sich um organische Verbindungen, die neben mindestens einer tert.-Aminogruppe eine gegenüber Isocyanatgruppen im Sinne der Isocyanat-Additionsreaktion reaktionsfähige Gruppe, insbesondere Hydroxyl- oder Aminogruppe aufweisen. Diese Verbindungen haben im allgemeinen ein Molekulargewicht von 88 bis 250, insbesondere von 88 bis 150.

Als Komponente D) bzw. als Teil der Komponente D) kommen beispielsweise Aminoalkohole wie N,N-Diethylethanolamin, N,N-Dimethylethanolamin, N,N-Dimethylisopropanolamin, N,N-Dimethyl-1,3-propandiamin, N,N-Diethylethylendiamin, 2-Dibutylamino-ethanol, 3-(Dimethylamino)-1-propanol, 1-Methylpiperazin, 1-Methyl-4-piperidinol, 2-Morpholinoethanol, 2-Piperidinoethanol, 2-Piperazinoethanol, 2 2-Piperazinoethylamin, 3-Morpholinopropylamin, N,N-Dibutyl-trimethylendiamin, 3-(Diethylamino)-1-propanol, N-Methyl-3-pyrrolidinol, 2-(Hydroxymethyl)-N-Methylpiperidin oder mindestens eine tert.-Aminogruppe und eine primäre oder sekundäre Aminogruppe aufweisende Polyamine in Betracht. Beispiele derartiger Verbindungen sind N,N-Dimethyl-ethylendiamin, N,N-Diethyl-1,4-butandiamin oder N-Methyl-piperazin.

Zu den bevorzugten Verbindungen, die als Komponente D) bzw. als Teil der Komponente D) zum Einsatz gelangen, gehören 4-(2-Hydroxyethyl)-pyridin, 2-Hydroxyethylmorpholin, N,N-Dimethyl-1,3-propandiamin, N,N-Diethyl-1,4-butandiamin und N,N-Dimethylaminoethanol und N,N-Dimethylaminopropylamin.

Die Komponente D) kommt in einer Menge von 0 bis 50, vorzugsweise 10 bis 50 Äquivalent-%, bezogen auf die Isocyanatgruppe der Komponente A) zum Einsatz. Vorzugsweise wird die Komponente D) in einer solchen Menge mitverwendet, daß in den erfindungswesentlichen Additionsprodukten 0 bis 200, vorzugsweise 2 bis 200 und insbesondere 5 bis 100 Milliäquivalente an tert.-Aminogruppen pro 100 g Feststoff vorliegen.

Bei der gegebenenfalls mitzuverwendenden Komponente E) handelt es sich um organische Verbindungen des Molekulargewichtsbereichs 32 bis 3000, vorzugsweise 118 bis 2000 mit zwei gegenüber Isocyanatgruppen reaktionsfähigen Gruppen, insbesondere mit zwei alkoholischen Hydroxylgruppen. Beispielhaft genannt seien insbesondere Polyester- oder Polyetherdiole der an sich bekannten Art des genannten Molekulargewichtsbereichs.

Die Komponente E) wird bei der Herstellung der erfindungswesentlichen Additionsverbindungen, falls überhaupt, in einer Menge von bis zu 20, vorzugsweise bis zu 10 Äquivalent-%, bezogen auf die Isocyanatgruppen der Komponente A) eingesetzt. Besonders bevorzugt wird ohne Mitverwendung der Komponente E) gearbeitet.

Bei der Herstellung der erfindungswesentlichen Additionsprodukte aus den beispielhaft genannten Ausgangsmaterialien A) bis E) kann nach unterschiedlichen Methoden gearbeitet werden Im allgemeinen erfolgt die Umsetzung in der Schmelze bei Temperaturen von 20 bis 250, vorzugsweise 60 bis 140°C. Hierbei kann man beispielsweise so vorgehen, daß man die Isocyanatkomponente A) mit einem Gemisch der Komponente B) und gegebenenfalls C), D) und/oder E) umsetzt oder aber zunächst aus der Komponente A) und einem Teil der Reaktionspartner B) bis E) ein NCO-Prepolymer herstellt, welches anschließend in einer 2. Stufe mit dem Rest der Reaktionspartner mit gegenüber Isocyanatgruppen reaktionsfähigen Gruppen zur Reaktion gebracht wird.

Falls bei der Umsetzung ein NCO-Überschuß, bezogen auf die gegenüber Isocyanatgruppen reaktionsfähigen Gruppen der Reaktanden B) bis E) zum Einsatz gelangt, wird dieser Überschuß im allgemeinen durch Sekundärreaktionen bis auf einen Restgehalt von maximal 1,0 Gew.-%, vorzugsweise von 0 Gew.-% reduziert. Bei diesen Sekundärreaktionen kann es sich beispielsweise um die Bildung von Allophanatgruppen, Biuretgruppen oder von Isocyanuratgruppen durch entsprechende Additions- bzw. Polymerisationsreaktionen der überschüssigen NCO-Gruppen handeln. Derartige Reaktionen werden oftmals von den vorliegenden tert.-Stickstoffatomen katalysiert und durch 0,1 bis 24-stündiges Erhitzen auf 60 bis 250°C bewirkt.

Obwohl die Reaktion, von den geringen Lösungsmitteln, die gegebenenfalls zum Auflösen der Komponente A) eingesetzt werden, abgesehen, vorzugsweise in der Schmelze durchgeführt wird, ist es auch möglich, beispielsweise zur Erniedrigung der Viskosität inerte Lösungsmittel mitzuverwenden. Geeignete Lösungsmittel sind beispielsweise Dimethylformamid, N-Methylpyrrolidon, Dimethylacetamid, Aceton, 2-Butanon, Essigsäureethylester, Essigsäurebutylester, Methoxypropylacetat, Toluol oder Gemische derartiger Lösungsmittel. Im allgemeinen werden die Lösungsmittel im Verlauf oder im Anschluß an die Umsetzung, beispielsweise durch Destillation, entfernt.

Gegebenenfalls können auch an sich bekannte, die Isocyanat-Additionsreaktion beschleunigende, Katalysatoren mitverwendet werden. Beispielhaft genannt seien Triethylamin, N,N-Dimethylbenzylamin oder Zinnverbindungen wie beispielsweise Zinn(II)octoat oder Dibutylzinndilaurat.

Die erfindungswesentlichen Polyisocyanat-Additionsprodukte stellen Dispergiermittel für Feststoffe, insbesondere Pigmente oder Füllstoffe bei der Herstellung von entsprechenden wäßrigen Lacken oder Beschichtungsmitteln dar. Bei dieser erfindungsgemäßen Verwendung kommen die erfindungswesentlichen Polyadditionsverbindungen in einer Menge zum Einsatz, die 0,1 bis 100 Gew.-%, vorzugsweise 0,5 bis 40 Gew.-%, insbesondere 1 bis 15 Gew.-%, bezogen auf das Gewicht der Feststoffe beträgt. Die erfindungswesentlichen Verbindungen können bei der erfindungsgemäßen Verwendung entweder vorab mit den zu dispergierenden Feststoffen vermischt werden oder direkt in dem Dispergiermittel (Wasser) vor oder gleichzeitig mit der Zugabe der Feststoffe gelöst werden. Im allgemeinen ist es jedoch bevorzugt, die erfindungswesentlichen Polyadditionsverbindungen vor dem Dispergierprozeß auf die Feststoffe durch intensives Vermischen, aufzubringen.

Die erfindungswesentlichen Dispergiermittel eignen sich zur Erleichterung der Dispergierung von beliebigen Feststoffen, insbesondere von Pigmenten und Füllstoffen.

Als Pigmente können in diesem Zusammenhang beispielsweise anorganische oder organische Pigmente, sowie Ruße genannt werden. In Betracht zu ziehende anorganische Pigmente sind beispielsweise Titandioxide, Eisenoxide oder Spinelle, organische Pigmente sind beispielsweise Azopigmente, z.B. Pigmente der Monoazoreihe, Acetessigsäure-Derivate, Derivate der 2,3-Oxinaphtholsäure, 2,3-Oxinaphtholsäurearylamid-Derivate, Pigmente der Diazoreihe, Abkömmlinge des 3,3-Dichlorbenzidins, Diarylgelbtypen, kondensierte Disazopigmente, Metallkomplex-Pigmente, anthrachinoide Pigmente, Phthalocyaninpigmente, polycyclische Pigmente, insbesondere solche der Anthrachinon-, Thioindigo-, Chinacridon-, Dioxazin-, Pyrrolo-Pyrrol-, Naphthalintetracarbonsäure-, Pterylen-, Isoamidolin(on)-, Flavanthron-, Pyranthron- oder Isoviolanthron-Reihe.

Bevorzugte Pigmente sind β- und γ-Kristallmodifikationen des unsubstituierten linearen Chinacridons sowie Mischkristalle aus 2,9-Dimethylchinacridon und unsubstituierten Chinacridonen.

Besonders bevorzugt eignen sich die erfindungsgemäßen Dispergiermittel zum Dispergieren von Ruß in wäßrigen Lacksystemen.

Füllstoffe, die erfindungsgemäß in wäßrigen Lacken dispergiert werden können, sind beispielsweise solche auf Basis von Kaolin, Talkum, anderen Silikaten, Kreide, Glasfasern, Glasperlen oder Metallpulvern.

Als Lacksysteme, in denen erfindungsgemäß die beispielhaft genannten Festkörper dispergiert werden können, kommen beliebige wäßrige 1K- oder 2K-Lacke in Betracht. Beispielhaft genannt seien wäßrige 1K-Lacke wie beispielsweise solche auf Basis von Alkyd-, Acrylat-, Epoxid-, Polyvinylacetat-, Polyester- oder Polyurethanharzen oder wäßrige 2K-Lacke, beispielsweise solchen auf Basis von (i) Hydroxylgruppen aufweisenden Polyacrylat- oder Polyesterharzen und (ii) Melaminharzen oder gegebenenfalls blockierten Polyisocyanatharzen als Vernetzer. Auch wäßrige Beschichtungsmittel auf Basis von Polyepoxidharzen kommen in Betracht.

Die erfindungsgemäßen Polyisocyanat-Polyadditionsprodukte können im übrigen auch als Netz- oder Dispergiermittel bei der Einarbeitung von Feststoffen, insbesondere von Pigmenten in Kunststofformulierungen verwendet werden.

Die nachfolgenden Beispiele dienen der weiteren Illustrierung der vorliegenden Erfindung.

### Beispiele

In den nachstehenden Herstellungsbeispielen 1 bis 5 werden folgende Ausgangsmaterialien eingesetzt:
**Komponente A)**: 51gew.-%ige Lösung in n-Butylacetat eines Isocyanuratgruppen aufweisenden Trimerisats von 2,4-Diisocyanatotoluol mit einem NCO-Gehalt der Lösung von 8,0 Gew.-% (®Desmodur IL der Bayer AG)
**Komponente B)**: einwertiger Polyetheralkohol des Molekulargewichts 2250 mit einem Ethylenoxidgehalt von 87,5 Gew.-%, hergestellt durch Alkoxylierung von n-Butanol unter Verwendung eines Gemischs aus Ethylenoxid mit einer geringen Menge an Propylenoxid.
**Komponente D)**: N,N-Dimethylethanolamin

### Beispiele 1 bis 5 (Herstellung von erfindungsgemäß zu verwendenden Polyisocyanat-Polyadditionsprodukten)

In einem Dreihalskolben mit Innenthermometer, mechanischer Rührung und Destillierbrücke legt man die in der Tabelle 1 angegebene Menge der Komponente B) vor und entwässert 2 Stunden bei 120°C und einem Druck von 10 mbar. Man gibt bei 70°C die in der Tabelle 1 angegebenen Menge der Polyisocyanatkomponente A) zu, steigert die Temperatur auf 100°C und rührt 2 Stunden bei dieser Temperatur nach. Während dieser Zeit werden bei einem Druck von 10 mbar über die Destillierbrücke sämtliche flüchtigen Stoffe entfernt. Anschließend gibt man die in der Tabelle 1 angegebene Menge der Aminkomponente D) zu und rührt eine weitere Stunde nach. Man erhält eine lösemittelfreie wasserlösliche Polyadditionsverbindung, die zur Dispergierung von Pigmenten oder zur Dispergierung und Oberflächenbehandlung von beliebigen Füllstoffen verwendet werden kann. Aufgrund der Sekundärreaktionen, die durch die Wärmebehandlung in Gegenwart von tert.-Stickstoffatomen begünstigt werden, liegt der NCO-Gehalt am Ende in allen Fällen unter 1,0 Gew.-%.

**Tabelle 1**

| Beispiel | Komponente A)¹⁾ | Komponente B)²⁾ | Komponente D)²⁾ | Kennzahl³⁾ | Gehalt an Ethylenoxideinheiten⁴⁾ | Gehalt an tert.-Aminogruppen⁵⁾ |
|---|---|---|---|---|---|---|
| 1 | 0,143 | 0,093 | 0,05 | 100 | 72 | 19,65 |
| 2 | 0,157 | 0,093 | 0,05 | 105 | 71 | 19,49 |
| 3 | 0,1573 | 0,093 | 0,05 | 110 | 71 | 19,34 |
| 4 | 0,1716 | 0,093 | 0,05 | 120 | 70 | 19,04 |
| 5 | 0,2145 | 0,093 | 0,05 | 150 | 67 | 18,19 |

| | | | | | | |
|---|---|---|---|---|---|---|
| ¹⁾ Mengenangabe in "Mol NCO" | | | | | | |
| ²⁾ Mengenangabe in "Mol" | | | | | | |
| ³⁾ Kennzahl = (Anzahl der NCO-Gruppen):(Anzahl der gegenüber Isocyanatgruppen reaktionsfähigen Gruppen)x100 | | | | | | |
| ⁴⁾ Mengenangabe in "Gew-%" | | | | | | |
| ⁵⁾ Mengenangabe in "Milliäquivalenten pro 100 g" | | | | | | |

### Beispiele 6 bis 10 Verwendung

### Herstellung der Netzmittellösungen:

Die wasserlöslichen Polyadditionsverbindungen aus Tabelle 1 werden unter Erwärmung auf 65 bis 70°C in der in der Tabelle 2 angegebenen Menge Wasser gelöst. Man erhält klare Lösungen mit einem Feststoffgehalt von 40 Gew. %, die als Netzmittel zur Herstellung wäßriger Lackformulierungen verwendet werden können.

### Herstellung der Pigmentpasten:

In eine 300 ml Rundglasflasche werden 15,0 g Schwarzpigment (Farbruß FW 200, Handelsprodukt Fa. Degussa, 0,2 g Entschäumer (®Nopco 8034E, Handelsprodukt Fa. Münzig Chemie), 0,7 g Propylenglykol, 28,6 g Netzmittel (s. Tabelle 2) und 150 g Glasperlen (Druchmesser = 3 mm) gegeben und durch Schütteln in einem handelsüblichen Dispergator 90 Min. dispergiert. Anschließend werden die Glasperlen abfiltriert.

### Lackherstellung, Auftragung und Beurteilung:

In einer 100 ml Rundglasflasche werden unter 20 g Glasperlen (Druchmesser = 3 mm), 5,0 g Pigmentpaste, 0,3 g Antioxidanz (®Ascinin R konz., Handelsprodukt Fa. Bayer AG), 45,0 g wäßriges Alkydharz (Resydrol AY 586W, Handelsprodukt Fa. Hoechst AG) und 0,3 g Sikativ (Octa Soligen Co 7 aqua, Handelsprodukt Fa. B-orchers GmbH) im Dispergator 30 Min. homogenisiert. Nach einer Reifezeit von ca. 12 Stunden werden 100 µm Naßfilm auf eine entfettete Glasplatte aufgezogen. Nach 1 Tag Lagerung bei Raumtemperatur wird gemäß DIN 67530, ISO 2813, ASTM D 523 der Haze Gloss (Glanzschleier) und der Glanz nach Gardner (Winkel 20°) gemessen.

**Tabelle 2**

| Beispiel | Polyadditionsverbindung aus Beispiel | Wasser in ml | Feststoff | Glanz 20° | Haze Gloss |
|---|---|---|---|---|---|
| 6 | 1 | 380 | 40 % | 80,9 | 11,4 |
| 7 | 2 | 380 | 40 % | 80,5 | 12,9 |
| 8 | 3 | 380 | 40 % | 80,9 | 10,0 |
| 9 | 4 | 395 | 40 % | 81,7 | 9,9 |
| 10 | 5 | 410 | 40 % | 81,6 | 11,5 |
| Vergleich | Lösemittel enthaltendes Netz- und Dispergiermittel gemäß EP-A-0 154 678 | - | 40 % | 80,9 | 30,7 |

## Patentansprüche

1. Verwendung von wasserlöslichen, hydrophile Polyetherketten aufweisenden Polyisocyanat-Additionsprodukten mit einem Gehalt an Isocyanatgruppen von max. 1,0 Gew.-% und einem Gehalt an über monofunktionelle Alkohole B) eingebauten, innerhalb von Polyetherketten angeordneten Ethylenoxideinheiten (Molekulargewicht = 44) von 30 bis 80 Gew.-%, die durch Umsetzung
A) einer Polyisocyanat-Komponente einer (mittleren) NCO-Funktionalität von mindestens 2,5 und einem NCO-Gehalt von 5 bis 50 Gew.-%
mit
B) 5 bis 100 Äquivalent-%, bezogen auf die Isocyanatgruppen von A), einer einwertigen Alkoholkomponente, bestehend aus mindestens einem einwertigen Polyetheralkohol des Molekulargewichtsbereichs 150 bis 5000 mit einem Gehalt an Ethylenoxideinheiten von 50 bis 99,5 Gew.-%, der durch Alkoxylierung eines einwertigen Startermoleküls und gegebenenfalls im Anschluß an die Alkoxylierung durchgeführte Modifizierung des Alkoxylierungsprodukts durch Anlagerung von ε-Caprolacton in einer Menge von bis zu 40 Gew.-%, bezogen auf das Gewicht des einwertigen Alkohols, hergestellt worden ist,
C) 0 bis 20 Äquivalent-%, bezogen auf die Isocyanatgruppen von A), einer einwertigen Alkoholkomponente, bestehend aus mindestens einem, von den Alkoholen der Komponente B) verschiedenen, einwertigen Alkohol des Molekulargewichtsbereich 32 bis 5000,
D) 0 bis 50 Äquivalent-%, bezogen auf die Isocyanatgruppen von A), einer Aminkomponente, bestehend aus mindestens einem tertiären Amin des Molekulargewichtsbereichs 88 bis 250 mit einer gegenüber Isocyanatgruppen im Sinne der NCO-Additionsreaktion reaktionsfähigen Gruppe
und
E) 0 bis 20 Äquivalent-%, bezogen auf die Isocyanatgruppen von A), an im Sinne der NCO-Additionsreaktion mindestens difunktionellen Aufbaukomponenten des Molekulargewichtsbereichs 32 bis 3000
unter Einhaltung einer NCO-Kennzahl von 100 bis 200 unter Urethan- und gegebenenfalls Harnstoffbildung hergestellt worden sind, wobei gegebenenfalls im Überschuß vorliegende NCO-Gruppen durch gleichzeitig oder anschließend erfolgende Sekundärreaktionen bis auf einen Restgehalt von maximal 1,0 Gew.-% abreagiert worden sind,
als Dispergiermittel bei der Einarbeitung von Feststoffen in wäßrige Lacke oder Beschichtungsmittel.

2. Verwendung gemäß Anspruch 1, dadurch gekennzeichnet, daß das Polyisocyanat-Additionsprodukt unter Einhaltung einer NCO-Kennzahl von 100 bis 130 aus
A) einer Polyisocyanatkomponente einer mittleren NCO-Funktionalität von 3,0 bis 6 und einem NCO-Gehalt von 7 bis 30 Gew.-%, bestehend aus Isocyanuratgruppen aufweisenden Modifizierungsprodukten von 2,4-Diisocyanatotoluol oder dessen technischer Gemische mit bis zu 35 Gew.-%, bezogen auf Gemisch, an 2,6-Diisocyanatotoluol,
mit
B) 50 bis 90 Äquivalent-%, bezogen auf die Komponente A) einer Alkoholkomponente der unter B) in Anspruch 1 genannten Art
und
D) 10 bis 50 Äquivalent-%, bezogen auf die Komponente A) einer Aminkomponente der unter D) in Anspruch 1 genannten Art
unter Urethanbildung und gegebenenfalls gleichzeitig oder im Anschluß an die Urethanbildung durchgeführte Sekundärreaktionen zur Verminderung von gegebenenfalls vorliegenden überschüssigen NCO-Gruppen bis auf einen Restgehalt von maximal 1,0 Gew.-% hergestellt worden ist, wobei im übrigen die Art und Mengenverhältnisse der Ausgangskomponenten so gewählt werden, daß das Umsetzungsprodukt 40 bis 75 Gew.-% an über die Komponente B) eingebauten Ethylenoxideinheiten aufweist.

3. Verwendung gemäß Anspruch 1 und 2 zur Dispergierung von Pigmenten.

4. Verwendung gemäß Anspruch 1 bis 3 zur Dispergierung von Ruß.

## Claims

1. Use of water-soluble polyisocyanate addition products containing hydrophilic polyether chains, having a maximum isocyanate group content of 1.0 wt.% and comprising, arranged within polyether chains and incorporated by way of monofunctional alcohols B), from 30 to 80 wt.% ethylene oxide units (molecular weight = 44) which have been prepared by reacting
A) a polyisocyanate component of an (average) NCO functionality of at least 2.5 and an NCO content of from 5 to 50 wt.%
with
B) from 5 to 100 equivalent.%, related to the isocyanate groups of A), of a monohydric alcohol component comprising at least one monohydric polyether alcohol within the molecular weight range 150 to 5000 comprising from 50 to 99.5 wt.% ethylene oxide units and prepared by alkoxylation of a monovalent starter molecule optionally followed by modification of the alkoxylation product by addition of up to 40 wt.%, related to the weight of monohydric alcohol, of εcaprolactone,
C) from 0 to 20 equivalent.%, related to the isocyanate groups of A), of a monohydric alcohol component comprising at least one monohydric alcohol other than the alcohols of the component B) within the molecular weight range 32 to 5000,
D) from 0 to 50 equivalent.%, related to the isocyanate groups of A), of an amine component comprising at least one tertiary amine within the molecular weight range 88 to 250 having a group capable of reacting with isocyanate groups within the meaning of the NCO addition reaction
and
E) from 0 to 20 equivalent.%, related to the isocyanate groups of A), of structural components within the molecular weight range 32 to 3000 which are at least bifunctional within the meaning of the NCO addition reaction,
maintaining an NCO index of from 100 to 200, with formation of urethane and optionally urea, wherein NCO groups optionally present in excess have been reacted off to a maximum residual content of 1.0 wt.% by simultaneously or subsequently occurring secondary reactions,
as dispersants when incorporating solids in aqueous lacquers or coating compounds.

2. Use according to Claim 1, characterised in that the polyisocyanate addition product has been prepared, maintaining an NCO index of from 100 to 130, from
A) a polyisocyanate component of an average NCO functionality of from 3.0 to 6 and an NCO content of from 7 to 30 wt.% comprising isocyanurate group-containing modification products of 2,4-diisocyanatotoluene or technical-grade mixtures thereof with up to 35 wt.%, related to mixture, of 2,6-diisocyanatotoluene
with
B) from 50 to 90 equivalent.%, related to the component A), of an alcohol component of the type indicated in Claim 1 under B)
and
D) from 10 to 50 equivalent.%, related to the component A), of an amine component of the type indicated in Claim 1 under D),
with formation of urethane and, optionally simultaneously or following the urethane formation, secondary reactions carried out to reduce optionally present excess NCO groups to a maximum residual content of 1.0 wt.%, wherein the type and quantitative ratios of the starting components are moreover selected such that the reaction product contains from 40 to 75 wt.% of ethylene oxide units incorporated by way of the component B).

3. Use according to Claims 1 and 2 to disperse pigments.

4. Use according to Claims 1 to 3 to disperse carbon black.

## Revendications

1. Utilisation de produits d'addition de polyisocyanates hydrosolubles présentant des chaînes de polyéthers hydrophiles, possédant une teneur maximale en groupes isocyanate de 1,0% en poids et une teneur en unités d'oxyde d'éthylène (poids moléculaire = 44), disposées à l'intérieur des chaînes de polyéthers et incorporées via des alcools monofonctionnels B), de 30 à 80% en poids, que l'on a préparés par mise en réaction
A) d'un composant de polyisocyanate possédant une fonctionnalité NCO (moyenne) d'au moins 2,5 et une teneur en groupes NCO de 5 à 50% en poids,
avec
B) à concurrence de 5 à 100 équivalents-% rapportés aux groupes isocyanate de A), un composant d'alcool monovalent constitué par au moins un polyéther-alcool monovalent du domaine de poids moléculaire de 150 à 5.000, possédant une teneur en unités d'oxyde d'éthylène de 50 à 99,5% en poids, que l'on a préparé par alcoxylation d'une molécule d'amorçage monovalente et par modification, réalisée le cas échéant directement après l'alcoxylation, du produit d'alcoxylation par fixation par addition d'ε-caprolactone en une quantité allant jusqu'à 40% en poids rapportés au poids de l'alcool monovalent,
C) à concurrence de 0 à 20 équivalents-% rapportés aux groupes isocyanate de A), un composant d'alcool monovalent constitué par au moins un alcool monovalent différent des alcools du composant B), du domaine de poids moléculaire de 32 à 5.000,
D) à concurrence de 0 à 50 équivalents-% rapportés aux groupes isocyanate de A), un composant d'amine constitué d'au moins une amine tertiaire du domaine de poids moléculaire de 88 à 250, comprenant un groupe apte à réagir vis-à-vis de groupes isocyanate dans le sens de la réaction d'addition de groupes NCO, et
E) à concurrence de 0 à 20 équivalents-% rapportés aux groupes isocyanate de A), des constituants au moins difonctionnels dans le sens de la réaction d'addition de groupes NCO, du domaine de poids moléculaire de 32 à 3.000,
tout en maintenant un nombre caractéristique des groupes NCO de 100 à 200 avec formation d'uréthane et, le cas échéant, d'urée, dans laquelle on a achevé la réaction des groupes NCO éventuellement présents en excès via des réactions secondaires se déroulant simultanément ou ultérieurement jusqu'à ce que l'on obtienne une teneur résiduelle maximale de 1,0% en poids,
à titre d'agents de mise en dispersion lors de l'incorporation de substances solides dans des laques, des peintures ou des vernis ou encore des agents d'enduction aqueux.

2. Utilisation selon la revendication 1, caractérisée en ce qu'on a préparé le produit d'addition de polyisocyanate en maintenant une valeur caractéristique des groupes NCO de 100 à 130, à partir de
A) un composant de polyisocyanate possédant une fonctionnalité NCO moyenne de 3,0 à 6 et une teneur en groupes NCO de 7 à 30% en poids, constitué par des produits de modification présentant des groupes isocyanurate du 2,4-diisocyanatotoluène ou de ses mélanges techniques avec, jusqu'à concurrence de 35% en poids rapportés au mélange, le 2,6-diisocyanatotoluène,
avec
B) à concurrence de 50 à 90 équivalents-% rapportés au composant A), un composant d'alcool du type mentionné sous B) dans la revendication 1,
et
D) à concurrence de 10 à 50 équivalents-% rapportés au composant A), un composant d'amine du type mentionné sous D) à la revendication 1,
avec formation d'uréthane et avec des réactions secondaires effectuées le cas échéant de manière simultanée ou directement après la formation d'uréthane, pour diminuer la teneur en groupes NCO le cas échéant présents en excès jusqu'à une teneur résiduelle maximale de 1,0% en poids, dans laquelle on sélectionne par ailleurs le type et les proportions des composants de départ de telle sorte que le produit réactionnel présente des unités d'oxyde d'éthylène incorporées via le composant B), à concurrence de 40 à 75% en poids.

3. Utilisation selon les revendications 1 et 2 pour la mise en dispersion de pigments.

4. Utilisation selon les revendications 1 à 3 pour la mise en dispersion de noir de carbone.
